# EUROPEAN PATENT SPECIFICATION

(11) **EP 1 712 425 B1**
(45) Date of publication and mention of the grant of the patent: **14.01.2009**
(21) Application number: 06380083.3
(22) Date of filing: 12.04.2006
(51) Int. Cl.: B60R 16/02, F16B 9/02, F16L 3/23

(54) **Device to fasten flexible elongated elements, such as flexible tubes or cable bundles to a structure**
Vorrichtung zum Befestigen von flexiblen länglichen Elementen, wie flexible Rohre oder Kabelbündeln, an einer Struktur
Dispositif pour fixer des éléments allongés et flexibles tels que tuyaux flexibles ou faisceaux de câbles à une structure

(30) Priority: 15.04.2005 ES 200500907 P
(43) Date of publication of application: 18.10.2006
(73) Proprietor: ITW ESPANA, SA, 08520 Les Franqueses del Valles(Barcelona) (ES)
(72) Inventor: Picañol Roig, Jordi, 08520 Barcelona (ES)
(74) Representative: Carpintero Lopez, Francisco

(56) References cited:
- GB-A- 2 173 250
- US-A- 4 870 722
- US-A- 5 653 410
- US-A- 6 076 781

## Description

### TECHNICAL FIELD OF THE INVENTION

The invention lies in the field of systems for fastening flexible elongated elements such as electrical and/or optical cable bundles, flexible tubes, etc. to such structures as motor vehicle bodies, etc.

### BACKGROUND OF THE INVENTION

In industrial sectors such as that of motor vehicles, it is often necessary to install a large number of flexible elongated elements (for instance, electrical or optical cables, cable bundles, flexible tubes, etc.) to such structures as vehicle bodies. To carry out such installations, flexible elongated elements, for instance electrical cable bundles, may be fastened directly, for example, with clamps, to corresponding fastening elements (for instance to holes or eyebolts) provided in the bodywork. However, to assist the process of installation of the cables and to prevent the risk of the clamps causing damage to the flexible elements that are installed, devices have been developed specifically designed to permit the fast installation of such flexible elements. Said devices usually comprise an elongated part to which the cable bundles, tubes, etc. are fastened beforehand by means of adhesive tape or the like (for this reason it is commonplace to talk of these devices as supports for "taping" cable bundles). The elongated part to which the cable bundle is attached is supplemented with a coupling part configured for connecting to a complementary coupling part, which may form part of the structure of the body or be joined to it. For example, the coupling part may comprise a clip configured so as to be inserted in a matching hole in the body, or a hole configured to receive an element projecting from the body, for example a tab or lug with a head which may be retained in the coupling means of the device. The coupling part is usually joined to a central portion of the elongated part, whereby said elongated part is usually extended in the form of arms, in opposite directions from the coupling part.

Spanish utility model ES-U-293586 (corresponding to British patent application with publ. no. GB-A-2173250) describes a number of examples of devices of this type, which all have a substantially uniform elongated part, with a substantially rectangular cross section, and which at their ends have stops perpendicular to the planar surface of the elongated part. These stops have the function of preventing the cable bundles, once they are taped (joined with adhesive tape or the like) to the arms of the devices, from being able to slide sideways further than the extent permitted by the stops, i.e. the function of the stops is to retain the tape that joins the cable bundle to the elongated part. In ES-U-293586 embodiments are shown with different orientations between the coupling part and the elongated part, which permits different orientations between the cable bundle and a coupling element of the structure to which the cable bundle is to be connected by way of the fastening device in question.

The substantially planar part of the elongated part (and the corresponding substantially rectangular section of the elongated part) means that the orientation between the coupling part, connected to the elongated part, and the cable bundles may be hard to vary. This sometimes creates problems in the installation of cable bundles, as at times it may be desirable to fit them at angles and/or turned in a way difficult to achieve with known coupling devices: the rectangular section and the type of material normally used for devices of this type (usually some type of plastic material that enables them to be produced by injection moulding at a low price) mean that it may be hard both to bend the elongated part in the plane parallel to its planar surface, and to turn or twist the elongated part around its own longitudinal axis. Occasionally, however, it may be desirable to be able to execute such deformations of the device in order to obtain a given desired travel of the cable bundles.

An aim of the invention, therefore, is that of providing a device to fasten flexible elongated elements, such as cable bundles, tubes, etc., onto such structures as vehicle bodies and which will permit a variable orientation of the taped bundles in relation to the coupling part, without having to use excessive force.

US-A-4 870 722 discloses a device comprising the features of the preamble of claim 1 and claim 2.

### DESCRIPTION OF THE INVENTION

The invention is defined in claims 1 and 2. Some embodiments are defined in the dependent claims.

The invention refers to a device to fasten flexible elongated elements, such as flexible tubes or cable bundles, to a structure (for example, to the body of a motor vehicle). The device comprises:
a coupling part (for example a clip or the like configured so as to be inserted into a hole or the like in the body, or a part that has a hole to receive a lug or stem or other protruding element joined to the body) configured to be coupled to a matching element of the structure (for example, to the afore-mentioned hole, lug or stem, respectively, associated with the body); and
two side arms (which may each correspond to the halves of a general elongated element) joined to said coupling part and which extend (for example, in substantially opposing directions) from said coupling part.

Each of the arms comprises a first portion or segment (further away from the coupling part) which has a surface configured to receive or abut against a portion or segment of a flexible elongated element, so that said flexible elongated element may be joined by taping to said first segment of the arm, in a manner abutting on said surface. The surface may be substantially planar, for example, substantially straight along the longitudinal axis of the arm and straight or slightly concave in a direction perpendicular to said axis, in order to present a good bearing surface for a cable bundle.

In accordance with the invention, at least one of the arms (and preferably each arm) further comprises a second portion or segment which joins said first segment to the coupling part and which is configured in order to facilitate the turning of the first segment in relation to the coupling part, around a longitudinal axis of the arm.

In this way, the device permits a great deal of flexibility when it comes to installing the cable bundles, etc., as the actual device permits the installation of the cables oriented in several ways and without requiring the installer to exert considerable force on the device - something which could be detrimental to the integrity of the device.

In addition, this second segment may be configured so as to facilitate the bending of the arm in one or more directions, for example, in the plane parallel to the substantially planar surface of the first segment, so that the afore-mentioned flexibility offered by the device is further increased, i.e. the second segment of the arm would act as a "joint" or "hinge" in order to modify the orientation of the first segment.

The second segment may have a cross section that has at least one dimension reduced in relation to a cross section of the first segment and/or a cross section that has a smaller material surface area than a cross section of the first segment. The cross section may be substantially oval or rectangular, and its longer dimension may be reduced in respect of the corresponding dimension of a cross section of the first segment (or of a substantial portion of the first segment). For example, the second segment may have a smaller width than the first segment, something that facilitates the twisting of the first segment around the longitudinal axis of the arm.

This smaller width of the second segment may be established by means of two opposing notches in the arm. That is to say, if the arms comprise an elongated structure, between the first segment and the coupling part two notches may be established, so that a reduced segment - less wide- is established, which represents lower torsional resistance than the first segment in itself.

As an alternative, the smaller width of the second segment may be established by means of a single notch in the arm. For example, and to further facilitate the twisting of the arms, said notch may enter from a side edge of one arm and from an opposing side edge of the other arm.

In addition or alternatively, the second segment may comprise at least one through-hole in the arm. In this way, the through-hole represents an "elimination" of material, which makes it easier to turn the first segment around its longitudinal axis.

In accordance with the invention, the second segment comprises at least one portion or segment with a substantially circular cross section and/or a substantially cylindrical portion or segment that has a smaller diameter than the width of the first segment (but which may have a larger diameter than the thickness of said first segment). This configuration of the second segment also helps to facilitate the turning of the first segment in respect of the coupling part, around the longitudinal axis of the arm.

The second segment may have a smaller extension than the first segment, in the longitudinal direction of the arm.

However, there is also the possibility that the second segment may have a larger extension than the first segment, in the longitudinal direction of the arm. This reduces the surface (for the same longitudinal extension of the device) of the first segment on which the cable bundle or the like may be taped, but this option may be especially useful if we want to have the possibility of bending the arm in, for instance, a plane parallel to (or which contains) the planar surface of the first segment.

As has been suggested above, the first segment may have a substantially planar support surface for receiving or abutting against the flexible elongated element so that said flexible elongated element may be fastened with adhesive tape or the like to the first segment, in a manner abutting on the substantially planar surface.

Each arm may be provided with at least one stop configuration in order to retain taping that connects one flexible elongated element to the first segments of the arms, and to prevent the device from sliding along the flexible elongated element. This configuration may consist of a termination of the first segment which has a greater width than the main portion of the first segment, and optionally also a greater thickness than the main portion of the first segment. This greater thickness assists the taping process.

The device may be of a plastic material and/or comprise a single piece that may be produced by means of injection in a mould - something that helps to reduce the manufacturing costs of the devices.

### DESCRIPTION OF THE DRAWINGS

In order to supplement the description and for the purpose of assisting a clearer appreciation of the features of the invention, in accordance with preferred examples of practical embodiment of the same, a set of drawings is attached as an integral part of said description, wherein there has been represented, on an informative and non-restrictive basis, the following:
Figure 1.- It shows a perspective view of a non-claimed arrangement, illustrated for the purpose of providing information only.
Figure 2.- It shows another view of said arrangement, with a part of it in cross section.
Figure 3.- It shows a front view of said arrangement.
Figure 4.- It shows a front view of a preferred embodiment of the invention.
Figures 5A-5C.- They show a cross section of an arm of said preferred embodiment, according to three alternative modalities of the second segment.
Figure 6.- It shows diagrammatically an alternative modality of the invention.
Figure 7.- It shows a device substantially in accordance with the one of figure 1, but with stops of greater thickness.
Figure 8.- It shows diagrammatically a device in accordance with a preferred embodiment of the invention, with a cable bundle taped to the arms of the device.

### PREFERRED EMBODIMENT OF THE INVENTION

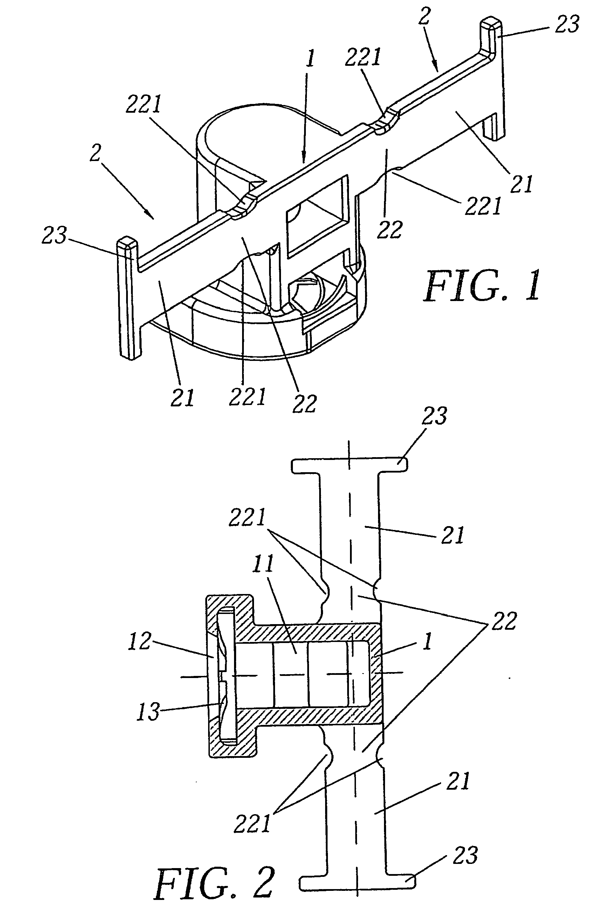

Figures 1-3 show a non-claimed arrangement which has a coupling part (1) configured so as to be coupled to a corresponding coupling element on the structure, and two side arms (2) joined to said coupling part (1) and which extend in opposite directions from said coupling part (1). In figure 2 we may see a cross section of the coupling part (1). As may be observed, said coupling part (1) defines a housing (11) (for example, cylindrical) to receive a lug or stem or the like associated with the structure to which we wish to couple the device (and, with it, the cable bundle or the like). This lug or stem enters a hole (12) provided in a lower portion of the coupling part (1), and which is fitted with a series of lips or fins (13) that form a retaining surface for a head of the lug or stem.

This type of coupling system is conventional in this technical sector, so it requires no further explanation. In any case, the device of the invention may, instead of the coupling part illustrated in the figures, incorporate any other type of coupling part, for example, a clip configured so as to be inserted in a hole in the structure, or a coupling part in line with what is described and illustrated in the above-mentioned document ES-U-293586 (or GB-A-2173250), etc.

Each one of the "arms" of the device comprises a first segment (21), which has a planar or substantially planar surface, suitable for receiving a segment of a flexible elongated element (3) (see also figure 10), so that said segment of the flexible elongated element may be joined by means of tapes (4) (for example, by means of adhesive tape) (see figure 10) to said first segment (21) of the arm (2), In addition, each one of the arms also comprises a second segment (22) which connects the first segment (21) to the coupling part (1) and which is configured to facilitate the turning of the first segment (21) in respect of the coupling part (1), around a longitudinal axis of the arm (2).

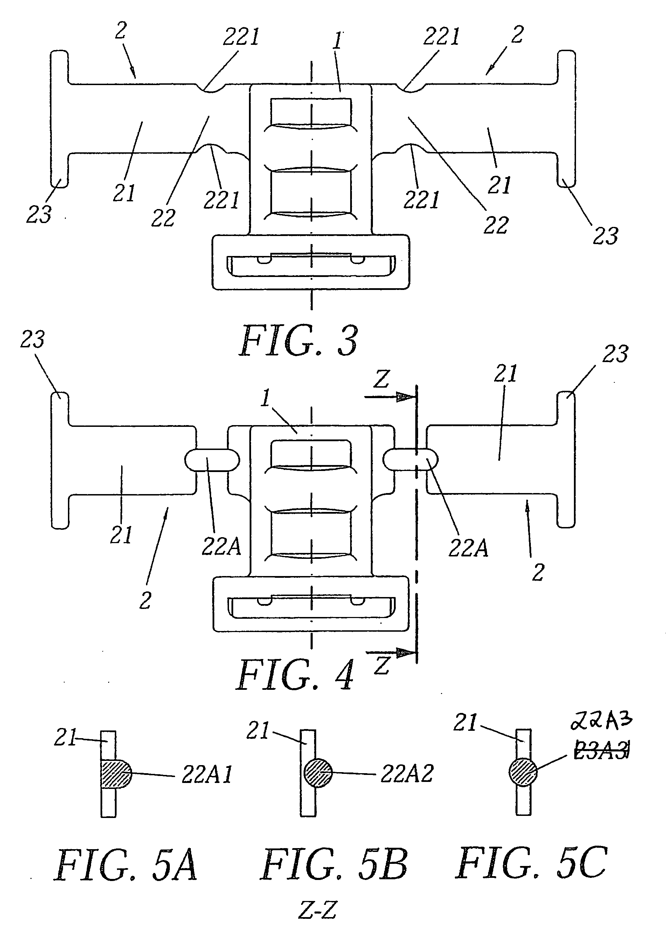

This second segment (22) is defined by means of two opposing notches (221) in the opposite edges (upper and lower in figure 3) of the arm. In this way, the second segment (22) has a cross section which has the width (or the "height", if we consider the device oriented as in figure 3) reduced compared with the corresponding cross section of the first segment (21) and which, therefore, has a cross section that presents a smaller material surface area than said cross section of the first segment (21). In this way, it is easier to turn the first segment (21).

As may be observed in figures 1-3, each arm is provided with a configuration in the form of a stop (23) so as to retain the tapes joining a flexible elongated element to the first segment (21) of the arm; these stops consist in a termination of the first segment (21) which presents a greater width than the main portion of the first segment (21) .

Figure 4 shows an embodiment of the invention, with a general structure similar to that of but with a different configuration of the second segment (22A); specifically, in this configuration, the second segment (22A) comprises a segment with a substantially circular cross section (22A2, 22A3), as is shown in close up in figures 5B and 5C, which illustrate some possible configurations of said cross section In principle, in this embodiment the second segment (22A) comprises a substantially cylindrical segment that has a smaller diameter than the width of the first segment (although it is possible for the diameter to be able to vary along the segment, so that it has a substantially oval or similar longitudinal section). It is not necessary for the section of the substantially cylindrical segment to be completely circular. Alternatively, it may have one or more straight sides. In fact, instead of a configuration with at least one curved part, the section may be polygonal, etc.

The embodiment in accordance with figures 4 and 5A-5C may be especially suitable if we want the first part not only to be able to turn around the longitudinal axis of the arm, but also "to bend" in another direction, in which case the second segment (22A) acts as a "hinge" or "joint" .

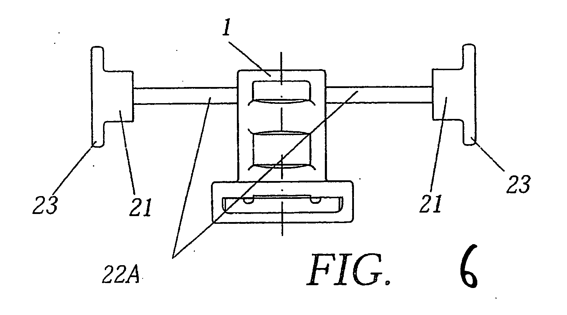

In the above-mentioned figures, the second segment (22A) has a smaller extension than the first segment, in the longitudinal direction of the arm. However, figure 6 shows diagrammatically an alternative modality of the invention, in which the second segment (22A, ) has a greater extension than the first segment (21) in the longitudinal direction of the arm. This modality is directly applicable to any of the above-described embodiments, and it may be beneficial for increasing the facility of turning of the first segment (21) on its longitudinal axis, and/or to assist the arm in being able to bend on the second segment so as to modify the longitudinal orientation of the first segment (21).

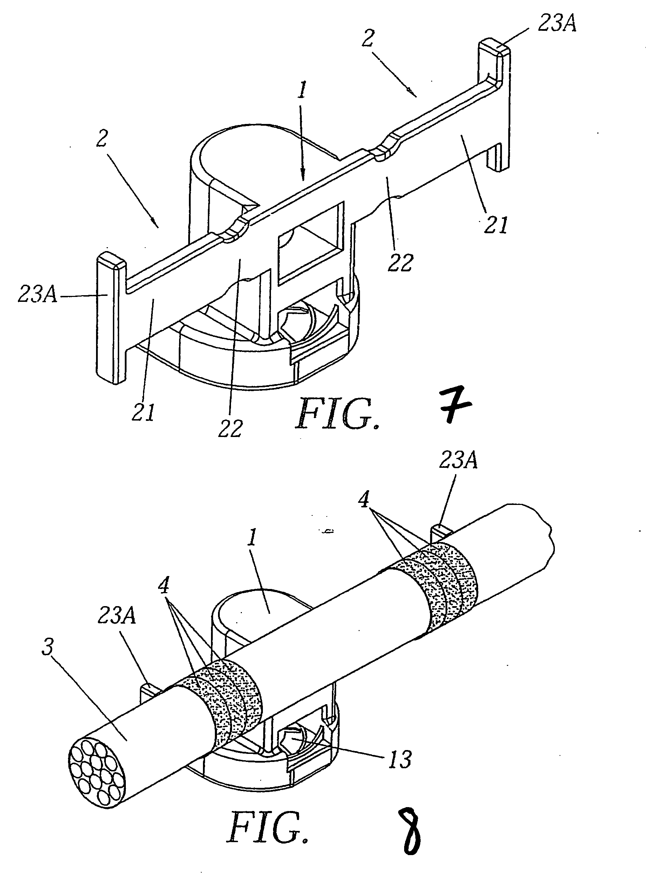

Figure 7 illustrates an alternative arrangement; according to this alternative, the stops (23A) have a greater thickness than the rest of the arm (2), so that they not only protrude in respect of the side edges (upper/lower) of the arm, but also in relation to the dorsal surface of the arm (i.e. in respect of the surface opposite the support surface for the cable bundle or the like). This configuration of the stops facilitates the taping process.

Lastly, figure 8 illustrates diagrammatically a device in accordance with this last embodiment, to which a cable bundle (3) is joined with adhesive tape (4).

All these embodiments of the invention may be made of plastic by means of a process of injection in a mould. The arms (2) and the coupling part (1) (to at least the main portion of same) may form a single piece, produced by means of said injection in a mould. The coupling part may be completed with accessories (such as suction pads, toothed retaining rings, etc.) commonplace in devices of this type.

In this text the word "comprises" and its variants (such as "comprising", etc.) should not be construed in an exclusive way, i.e. they do not exclude the possibility of what is described including other elements, steps, etc.

Furthermore, the invention is not confined to the specific embodiments that have been described, but also encompasses, for instance, the variants that may be executed by an average expert on the matter (for example, as regards the choice of materials, dimensions, components, configuration, etc., within what may be deduced from the claims.

## Claims

1. Device to fasten flexible, elongated elements such as flexible tubes or cable bundles, to a structure, the device comprising:
a coupling part (1) configured to be coupled to a corresponding element of the structure; and
two side arms (2) joined to said coupling part (1) and which extend from said coupling part, each of said arms comprising a first segment (21) which has a. surface configured for abutting against a segment of a flexible elongated element (3), so that said segment of the flexible elongated element can be joined by taping (4) to said first segment of the arm;
wherein
at least one of the arms additionally comprises a second segment (22, 22A, 22B, 22C) which joins said first segment (21) with the coupling part (1) and which is configured to facilitate the turning of the first segment (21) with respect to the coupling part (1), around a longitudinal axis of the arm;
characterise in that
the second segment (22A) comprises at least one segment with a substantially circular cross section (22A1, 22A2, 22A3) which has a diameter less than the width of the first segment.

2. Device to fasten flexible, elongated elements such as flexible tubes or cable bundles, to a structure, the device comprising:
a coupling part (1) configured to be coupled to a corresponding element of the structure; and
two side arms (2) joined to said coupling part (1) and which extend from said coupling part, each of said arms comprising a first segment (21) which has a surface configured for abutting against a segment of a flexible elongated element (3), so that said segment of the flexible elongated element can be joined by taping (4) to said first segment of the arm;
wherein
at least one of the arms additionally comprises a second segment (22, 22A, 22B, 22C) which joins said first segment (21) with the coupling part (1) and which is configured to facilitate the turning of the first segment (21) with respect to the coupling part (1), around a longitudinal axis of the arm;
**characterised in that**
the second segment (22A) comprises at least one substantially cylindrical segment which has a diameter less than the width of the first segment.

3. Device according to claim 1 or 2, wherein the second segment (22A) has a cross section which has at least one dimension which is reduced with respect to a cross section of the first segment (21).

4. Device according to any of the previous claims, wherein the second segment (22A) has a cross section which has a smaller material surface area than a cross section of the first segment (21).

5. Device according to any of the previous claims, wherein the second segment (22A) has a smaller width than said first segment (21).

6. Device according to any of the previous claims, wherein the second segment (22A) has a smaller extension than the first segment, in the longitudinal direction of the arm.

7. Device according to any of the claims 1-5, wherein the second segment (22A) has a greater extension (fig. 8) than the first segment, in the longitudinal direction of the arm.

8. Device according to any of the previous claims, wherein the first segment (21) has a substantially planar supporting surface, to abut against the flexible elongated element so that said flexible elongated element (3) can be fastened by means of tape (4) to said first segment, in a manner abutting upon the substantially planar surface.

9. Device according to any of the previous claims, wherein each arm is provided with at least one configuration (23, 23A) to retain tapes (4) which join a flexible elongated element (3) to the first segment (21) of the arm.

10. Device according to claim 9, wherein said configuration (23, 23A) consists of a termination of the first segment which has a greater width than a main portion of the first segment (21).

11. Device according to claim 10, wherein said configuration (23A) has a greater thickness than the main portion of the first segment (21).

12. Device according to any of the previous claims, wherein both arms comprise said second segment (22A) configured to facilitate the turning of the first segment with respect to the coupling part, around a longitudinal axis of the arm.

13. Device according to any of the previous claims, that is made of a plastic material.

14. Device according to any of the previous claims, that consists of a single piece obtainable by means of injection in a mould.

## Patentansprüche

1. Vorrichtung zum Befestigen von flexiblen, länglichen Elementen, wie zum Beispiel flexiblen Schläuchen oder Kabelbündeln, an einer Struktur,
wobei die Vorrichtung Folgendes umfasst:
einen Verbindungsteil (1), der zur Verbindung mit einem entsprechenden Element der Struktur konfiguriert ist; und
zwei Seitenarme (2), die mit dem Verbindungsteil (1) verbunden sind und die sich von dem Verbindungsteil erstrecken, wobei jeder der Arme ein erstes Segment (21) umfasst, das eine zur Anlage an ein Segment eines flexiblen länglichen Elements (3) konfigurierte Fläche aufweist, so dass das Segment des flexiblen länglichen Elements durch Klebeband (4) mit dem ersten Segment des Arms verbunden werden kann;
wobei
mindestens einer der Arme darüber hinaus ein zweites Segment (22, 22A, 22B, 22C) umfasst, das das erste Segment (21) mit dem Verbindungsteil (1) verbindet und das dazu konfiguriert ist, das Drehen des ersten Segments (21) bezüglich des Verbindungsteils (1) um eine Längsachse des Arms zu erleichtern;
**dadurch gekennzeichnet, dass**
das zweite Segment (22A) mindestens ein Segment mit einem im Wesentlichen kreisförmigen Querschnitt (22A1, 22A2, 22A3) umfasst, der einen Durchmesser aufweist, der kleiner ist als die Breite des ersten Segments.

2. Vorrichtung zum Befestigen von flexiblen länglichen Elementen, wie zum Beispiel flexiblen Schläuchen oder Kabelbündeln, an einer Struktur,
wobei die Vorrichtung Folgendes umfasst:
einen Verbindungsteil (1), der zur Verbindung mit einem entsprechenden Element der Struktur konfiguriert ist; und
zwei Seitenarme (2), die mit dem Verbindungsteil (1) verbunden sind und die sich von dem Verbindungsteil erstrecken, wobei jeder der Arme ein erstes Segment (21) umfasst, das eine zur Anlage an ein Segment eines flexiblen länglichen Elements (3) konfigurierte Fläche aufweist, so dass das Segment des flexiblen länglichen Elements durch Klebeband (4) mit dem ersten Segment des Arms verbunden werden kann;
wobei
mindestens einer der Arme darüber hinaus ein zweites Segment (22, 22A, 22B, 22C) umfasst, das das erste Segment (21) mit dem Verbindungsteil (1) verbindet und das dazu konfiguriert ist, das Drehen des ersten Segments (21) bezüglich des Verbindungsteils (1) um eine Längsachse des Arms zu erleichtern;
**dadurch gekennzeichnet, dass**
das zweite Segment (22A) mindestens ein im Wesentlichen zylindrisches Segment umfasst, das einen Durchmesser aufweist, der kleiner ist als die Breite des ersten Segments.

3. Vorrichtung nach Anspruch 1 oder 2, wobei das zweite Segment (22A) einen Querschnitt aufweist, der mindestens ein Maß aufweist, das bezüglich eines Querschnitts des ersten Segments (21) reduziert ist.

4. Vorrichtung nach einem der vorhergehenden Ansprüche, wobei das zweite Segment (22A) einen Querschnitt aufweist, der eine kleinere Materialoberfläche aufweist als der Querschnitt des ersten Segments (21).

5. Vorrichtung nach einem der vorhergehenden Ansprüche, wobei das zweite Segment (22A) eine kleinere Breite als das erste Segment (21) aufweist.

6. Vorrichtung nach einem der vorhergehenden Ansprüche, wobei das zweite Segment (22A) eine kleinere Erstreckung in Längsrichtung des Arms als das erste Segment aufweist.

7. Vorrichtung nach einem der Ansprüche 1 - 5, wobei das zweite Segment (22A) eine größere Erstreckung (Figur 8) in Längsrichtung des Arms als das erste Segment aufweist.

8. Vorrichtung nach einem der vorhergehenden Ansprüche, wobei das erste Segment (21) eine im Wesentlichen planare Stützfläche zur Anlage an das flexible längliche Element aufweist, so dass das flexible längliche Element (3) durch Klebeband (4) an der im Wesentlichen planaren Fläche anliegend an dem ersten Segment befestigt werden kann.

9. Vorrichtung nach einem der vorhergehenden Ansprüche, wobei jeder Arm mit mindestens einer Konfiguration (23, 23A) zum Festhalten der Klebebänder (4) versehen ist, die ein flexibles längliches Element (3) mit dem ersten Segment (21) des Arms verbinden.

10. Vorrichtung nach Anspruch 9, wobei die Konfiguration (23, 23A) aus einem Abschluss des ersten Segments besteht, das eine größere Breite aufweist als ein Hauptteil des ersten Segments (21).

11. Vorrichtung nach Anspruch 10, wobei die Konfiguration (23A) eine größere Dicke aufweist als der Hauptteil des ersten Segments (21).

12. Vorrichtung nach einem der vorhergehenden Ansprüche, wobei beide Arme das zweite Segment (22A) umfassen, das dazu konfiguriert ist, das Drehen des ersten Segments bezüglich des Verbindungsteils um eine Längsachse des Arms zu ermöglichen.

13. Vorrichtung nach einem der vorhergehenden Ansprüche, die aus einem Kunststoffmaterial besteht.

14. Vorrichtung nach einem der vorhergehenden Ansprüche, die aus einem einzelnen Teil besteht, das durch Spritzen in eine Form erhältlich ist.

## Revendications

1. Dispositif pour fixer des éléments allongés et flexibles tels que tuyaux flexibles ou faisceaux de câbles à une structure, le dispositif comprenant :
une pièce d'accouplement (1) configurée pour être accouplée à un élément correspondant de la structure ; et
deux bras latéraux (2) unis à ladite pièce d'accouplement (1) et qui s'étendent à partir de ladite pièce d'accouplement, chacun desdits bras comprenant un premier segment (21) qui a une surface configurée pour s'appuyer contre un segment d'un élément allongé et flexible (3), afin que ledit segment de l'élément allongé et flexible puisse être attaché avec un ruban adhésif (4) audit premier segment du bras ;
dans lequel
au moins un des bras comprend en plus un second segment (22, 22A, 22B, 22C) qui unit ledit premier segment (21) à la pièce d'accouplement (1) et qui est configuré pour faciliter la rotation du premier segment (21) par rapport à la pièce d'accouplement (1) autour de l'axe longitudinal du bras ;
**caractérisé en ce que**
le second segment (22A) comprend au moins un segment (22A1, 22A2, 22A3) qui a une section transversale sensiblement circulaire de diamètre inférieur à la largeur du premier segment.

2. Dispositif pour fixer des éléments allongés et flexibles tels que tuyaux flexibles ou faisceaux de câbles à une structure, le dispositif comprenant :
une pièce d'accouplement (1) configurée pour être accouplée à un élément correspondant de la structure ; et
deux bras latéraux (2) unis à ladite pièce d'accouplement (1) et qui s'étendent à partir de ladite pièce d'accouplement, chacun desdits bras comprenant un premier segment (21) qui a une surface configurée pour s'appuyer contre un segment d'un élément allongé et flexible (3), afin que ledit segment de l'élément allongé et flexible puisse être attaché avec un ruban adhésif (4) audit premier segment du bras ;
dans lequel
au moins un des bras comprend en plus un second segment (22, 22A, 22B, 22C) qui unit ledit premier segment (21) à la pièce d'accouplement (1) et qui est configuré pour faciliter la rotation du premier segment (21) par rapport à la pièce d'accouplement (1) autour de l'axe longitudinal du bras ;
**caractérisé en ce que**
le second segment (22A) comprend au moins un segment sensiblement cylindrique qui a un diamètre inférieur à la largeur du premier segment.

3. Dispositif selon la revendication 1 ou 2, dans lequel le second segment (22A) présente une section transversale qui a au moins une dimension réduite par rapport à la section transversale du premier segment (21).

4. Dispositif selon l'une quelconque des revendications précédentes, dans lequel le second segment (22A) présente une section transversale qui a une superficie de surface matérielle inférieure à la section transversale du premier segment (21).

5. Dispositif selon l'une quelconque des revendications précédentes, dans lequel le second segment (22A) a une largeur inférieure à celle dudit premier segment (21).

6. Dispositif selon l'une quelconque des revendications précédentes, dans lequel le second segment (22A) a une extension, dans la direction longitudinale du bras, inférieure à celle du premier segment.

7. Dispositif selon l'une quelconque des revendications 1 à 5, dans lequel le second segment (22A) a une extension, dans la direction longitudinale du bras, supérieure à celle du premier segment (Figure 8).

8. Dispositif selon l'une quelconque des revendications précédentes, dans lequel le premier segment (21) présente une surface de support sensiblement plane, pour s'appuyer contre l'élément allongé et flexible afin que ledit élément allongé et flexible (3) puisse être attaché au moyen d'un ruban adhésif (4) audit premier segment du bras, de manière à ce qu'il s'appuie sur la surface sensiblement plane.

9. Dispositif selon l'une quelconque des revendications précédentes, dans lequel chaque bras est pourvu d'au moins une configuration (23, 23A) pour maintenir les rubans adhésifs (4) qui assemblent un élément allongé et flexible (3) au premier segment (21) du bras.

10. Dispositif selon la revendication 9, dans lequel ladite configuration (23, 23A) consiste en une terminaison du premier segment qui présente une largeur supérieure à celle de la partie principale du premier segment (21).

11. Dispositif selon la revendication 10, dans lequel ladite configuration (23A) présente une épaisseur supérieure à celle de la partie principale du premier segment (21).

12. Dispositif selon l'une quelconque des revendications précédentes, dans lequel les deux bras comprennent ledit second segment (22A) configuré pour faciliter la rotation du premier segment par rapport à la pièce d'accouplement autour de l'axe longitudinal du bras.

13. Dispositif selon l'une quelconque des revendications précédentes, **caractérisé en ce qu'**il est fait en matière plastique.

14. Dispositif selon l'une quelconque des revendications précédentes, **caractérisé en ce qu'**il consiste en une pièce monobloc pouvant être obtenue au moyen d'une injection dans un moule.
